(19) Europäisches Patentamt
European Patent Office
Office européen des brevets

(11) Veröffentlichungsnummer: **0 215 259**
**B1**

(12) # EUROPÄISCHE PATENTSCHRIFT

(45) Veröffentlichungstag der Patentschrift: **13.06.90**

(51) Int. Cl.$^5$: **C 08 G 75/02**

(21) Anmeldenummer: **86110676.3**

(22) Anmeldetag: **01.08.86**

(54) **Verfahren zur Herstellung von hochmolekularen, gegebenenfalls verzweigten Polyarylensulfiden.**

(30) Priorität: **13.08.85 DE 3528978**

(43) Veröffentlichungstag der Anmeldung:
**25.03.87 Patentblatt 87/13**

(45) Bekanntmachung des Hinweises auf die Patenterteilung:
**13.06.90 Patentblatt 90/24**

(84) Benannte Vertragsstaaten:
**BE DE FR GB IT**

(56) Entgegenhaltungen:
**EP-A-0 100 536**
**EP-A-0 162 210**
**DE-A-3 318 401**
**US-A-4 056 515**
**US-A-4 060 520**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Ostlinning, Edgar, Dr.**
**Rembrandtstrasse 37**
**D-4000 Düsseldorf (DE)**
Erfinder: **Idel, Karsten, Dr.**
**Am Schwarzkamp 38**
**D-4150 Krefeld (DE)**
Erfinder: **Bottenbruch, Ludwig, Dr.**
**Wöhlerstrasse 5**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 215 259 B1**

Courier Press, Leamington Spa, England.

**Beschreibung**

Die Erfindung betrifft ein wasserfreies Verfahren zur Herstellung von hochmolekularen, gegebenenfalls verzweigten Polyarylensulfiden. Diese können in einem polaren organischen Lösungsmittel in Abwesenheit von Wasser in einem Reaktionskessel oder in einer Reaktionskesselkaskade mit zwei bis sechs Reaktionskesseln und/oder einem oder mehreren Reaktionsrohren kontinuierlich hergestellt werden.

Polyarylensulfide und ihre Herstellung sind bekannt (z.B. US—PS—2 513 188). Auch kontinuierliche Verfahren zu ihrer Herstellung sind beschrieben (US—PS—4 056 515).

Die bekannten Verfahren setzen wasserhaltige Ausgangsstoffe ein, die vor der Umsetzung in einem extra Reaktionsschritt zumindest teilweise entwässert werden müssen.

So werden z.B. im Verfahren der DE—OS—3 030 488 Alkalisulfide eingesetzt, die einen Wassergehalt von 1 bis 2,4 mol Wasser pro mol Alkalisulfid haben. Gemäß den US—PS—4 056 515 und 4 060 520 verbleiben in den Reaktionsgemischen nach der Vorentwässerung ein Wassergehalt von mindestens 1 mol pro mol S-Spender. In der US—PS—4 282 347 wird nach dem Entwässerungsschritt Wasser zum Reaktionsgemisch gegeben, um einen bestimmten Wassergehalt einzustellen.

Ebenso ist ein Verfahren bekannt, bei dem wasserhaltige Stoffe vor der Reaktion in Anwesenheit aller Reaktionspartner entwässert werden (siehe DE—OS—3 243 189).

Auch ist ein Verfahren bekannt, bei dem wasserhaltige Stoffe vor der Reaktion mit Hilfe eines inerten Lösungsmittel, das ein Azeotrop mit Wasser bildet, von Wasser befreit (siehe DE—OS—3 318 401) werden.

Aus der EP—A—162 210 ist bekannt Polyarylensulfide in einem kontinuierlichen Verfahren herzustellen, wobei im ersten Verfahrensschrift eine Entwässerung erfolgt.

All diese Verfahren lassen sich aufgrund der aufwendigen Entwässerung nur sehr schwer kontinuierlich durchführen. Hinzu kommt, daß bei einigen Verfahren bestimmte Wassermengen nachträglich eingestellt werden müssen. Ein weiterer Nachteil ist, daß bei nahezu allen Verfahren Überdrucke anzuwenden sind.

Ebenso sind Verfahren bekannt, die wasserfreies Natriumsulfid als Schwefelquelle einsetzen.

Demgegenüber wurde nun ein wasserfreies Verfahren gefunden, nach dem hochmolekulare, gegebenenfalls verzweigte Polyarylensulfide hergestellt werden können, das bei geringem Überdruck oder bei Normaldruck durchgeführt wird, so daß ohne Druckapparatur gearbeitet werden kann. Eine im Gegensatz zum Stand der Technik deutlich vereinfachte kontinuierliche Fahrweise wird durch den Einsatz von wasserfreien Stoffen ermöglicht.

Gegenstand der Erfindung ist ein wasserfreies Verfahren zur Herstellung von gegebenenfalls verzweigten Polyarylensulfiden aus

a) 50—100 mol-% Dihalogenaromaten der Formel

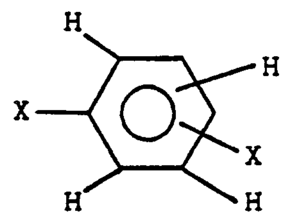

I

und 0—50 mol-% Dihalogenaromaten der Formel

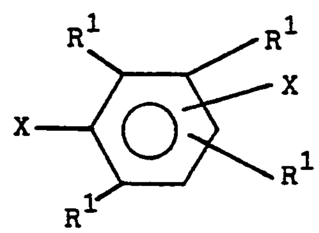

II

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und imer ein Rest $R^1$ verschieden von Wasserstoff ist und

b) 0 bis 5 mol-%, bevorzugt 0 bis 1,25 mol-%, bezogen auf die Summe der Dihalogenaromaten der Formel I und II, eines Tri- oder Tetrahalogenaromaten der Formel

$$ArX_n \qquad III,$$

wobei

Ar ein aromatischer oder heterocyclischer Rest ist

X für Halogen wie Chlor oder Brom steht und

n für die Zahl 3 oder 4 steht und

c) 50 bis 99 mol-% Natrium- oder Kaliumsulfid und 1 bis 50 mol-% Natrium- oder Kaliumhydrogensulfid, wobei das molare Verhältnis von (a+b):c im Bereich von 0,75:1 bis 1,15:1, vorzugsweise 0,90:1 bis 1,10: 1, liegt in 1,10: 1, liegt in

d) einem organischen Lösungsmittel, unter Mitverwendung von Katalysatoren und/oder Cosolventien, wobei das molare Verhältnis von Sulfid und Hydrogensulfid c) zu dem organischen Lösungsmittel d) im Bereich von 1:2 bis 1:15 liegt, dadurch gekennzeichnet, daß die gegebenenfalls kontinuierliche Umsetzung derart erfolgt, daß das Lösungsmittel, die Halogenaromaten der Formeln I, II und III sowie die Hydrogensulfide und Sulfide mit den Katalysatoren und/oder Cosolventien in wasserfreier Form gleichzeitig oder nacheinander der Reaktionsmischung zugeführt werden, wobei eingesetzte Feststoffe eine Korngröße von 1 bis 5000 Mikrometer, bevorzugt 1 bis 1000 Mikrometer, besitzen.

Die Reaktionszeit kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen.

Als Katalysatoren können für diesen Zweck übliche Substanzen in üblichen Mengen eingesetzt werden, beispielsweise Natrium- oder Kaliumfluoride, -phosphate und -carboxylate. Es werden pro Mol Sulfid 0,02 bis 1,0 mol Katalysator eingesetzt.

Als Cosolventien können beispielsweise N,N-Dialkylcarbonsäureamide von $C_1$—$C_8$-aliphatischen und $C_6$—$C_{12}$-aromatischen Carbonsäuren in einer Menge von 0,02 bis 1 mol, bezogen auf 1 mol Natrium- oder Kaliumsulfid, eingesetzt werden, z.B. N,N-Dimethylacetamid, N,N-Diethyhlacetamid, N,N-Dimethylpropionamid.

Erfindungsgemäß können meta- und para-Dihalogenaromaten der Formel (I) bzw. (II) eingesetzt werden. In diesem Fall kann das Verhältnis meta- zur Para-Dihalogenaromat bis zu 30:70 betragen.

Zur Herstellung von thermoplastisch besonders gut verarbeitbaren Polyarylensulfiden werden besonders bevorzugt p-Dihalogenaromaten eingesetzt.

Die Sulfide werden in üblichen Mengen und in üblicher Weise eingesetzt. Natrium- oder Kaliumsulfid sind geeignet. Es können Sulfide eingesetzt werden, die aus den Hydrogensulfiden mit Natrium- oder Kaliumhydroxid hergestellt werden.

Als Hydrogensulfide sind Natrium- oder Kaliumhydrogensulfid geeignet. Sie können aus Hydroxiden und Schwefelwasserstoff hergestellt werden. Ebenso ist möglich sie aus Sufiden mit Schwefelwasserstoff herzustellen.

Beispiele für erfindungsgemäß einzusetzende Dihalogenaromaten der Formel (I) sind:

1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol. Sie sind allein oder im Gemisch miteinander verwendbar. Besonders bevorzugt sind 1,4-Dichlorbenzol und/oder 1,4-Dibrombenzol.

$R^1$ steht in Formel II vorzugsweise für Wasserstoff, $C_1$—$C_{20}$-Alkyl, $C_5$—$C_{20}$-Cycloalkyl, $C_6$—$C_{24}$-Aryl, $C_7$—$C_{24}$-Alkylaryl oder $C_7$—$C_{24}$-Aralkyl. Weiterhin können zwei zueinander orthoständige Reste $R^1$ einen ankondensierten aromatischen Ring mit insgesamt 6 C-Atomen oder einen ankondensierten heterocyclischen Ring mit 5—6 Ringatomen und 1—3 Heteroatomen wie N, O und S bilden.

Beispiele für erfindungsgemäß einzusetzende Dihalogenaromaten der Formel (II) sind:

2,5-Dichlortoluol, 2,5-Dichlorxylol, 1,4-Dichlor-2-ethylbenzol, 1,4-Dibrom-2-ethylbenzol, 1-Brom-4-chlor-2-ethylbenzol, 1,4-Dichlor-2,3,5,6-tetramethylbenzol, 1,4-Dichlor-2-cyclohexylbenzol,, 2,5-Dichlordiphenyl, 2-Bennzyl-1,4-dichlorbenzol, 2,5-Dibromdiphenyl, ,2,5-Dichlor-4′-methyhl-diphenyl, 2,5-Dibrom-4′-methyl-diphenyl, 1,4-Dichlor-2-hexylbenzol, 2,4-Dichlortoluol, 2,4-Dichlorxylol, 2,4-Dibromcumol, und 1,3-Dichlor-5-cyclohexylbenzol. Sie sind allein oder im Gemisch miteinander einsetzbar.

Ar steht in Formel (III) vorzugsweise für einen aromatischen Rest mit 6—24 C-Atomen oder heterocyclischen Rest mit 6—24 Ringatomen, besonders bevorzugt für einen aromatischen Rest mit 6—10 C-Atomen oder heterocyclischen Rest der bis zu 3 Heteroatome wie N, S, O enthalten kann.

Beispiele für erfindungsgemäß einzusetzende Tri- bzw. Tetrahalogenaromaten der Formel (III) sind:

1,2,3-Trichlorbenzol, 1,2,4-Trichlorbenzol, 1,2,4-Tribrombenzol, 1,3,5-Trichlor-2,4,6-trimethyl-benzol, 1,2,3-Trichlornaphthalin, 1,2,6-trichlornaphthalin, 2,3,4-Trichlortoluol, 2,3,6-Trichlortoluol, 1,2,3,4-Tetrachlorbenzol, 2,2′-4,4′-Tetrachlordiphenyl, 1,3,5-Trichlortriazin.

Erfindungsgemäß geeignete organische Lösungsmittel sind z.B. Lactame wie N-Alkyllactame, beispielsweise N-Methylpyrrolidon, N-Ethylpyrrolidon, N-Methylpiperidon, N-Isopropylpyrrolidon, N-Methylcaprolactam, N-Ethylcaprolactam.

Der Siedepunkt der Lösungsmittel sollte bei 200°C bis 280°C liegen. Die Umsetzungstemperatur beträgt 20 bis 270°C.

Bei der Durchführung in der Kesselkaskade kann die Reaktionstemperatur von Kessel zu Kessel steigen und sich jeweils um 5 bis 30°C unterscheiden.

Die erfindungsgemäßen Polyarylensulfide können mit anderen Polymeren, Pigmenten und Füllstoffen, beispielsweise Graphit, Metallpulver, Glaspulver, Quarzmehl, Glasfasern und Kohlefasern gemischt oder mit den für Polyarylensulfiden üblichen Stabilisatoren oder Entformungsmitteln, versetzt werden.

Im allgemeinen wird das Schmelzfließverhalten von Polyarylensulfiden nach ASTM 1238—70 bei

316°C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa.s) bei 306°C in Abhängigkeit von der Schubspannung (in Pa.s) mit Hilfe des Instron-Rotationsviskosimeters bestimmt.

Man kann auf diese Weise die Schmelzviskosität in einem sehr weiten Bereich von $10^{-1}$ bis $10^{7}$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 de Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemäßen Polarylensulfide besitzen nach der Isolierung aus dem Reaktionsgemisch im allgemeinen Schmelzviskositäten von $0{,}1$—$10^1$ bis $5$—$10^4$ Pa.s, vorzugsweise von $0{,}1$—$10^2$ bis $0{,}5$—$10^4$ Pa.s und gute farbliche Eigenschaften.

Ebenso können Polyarylensulfide über chromatografische Verfahren analysiert werden, um Aussagen über Molekulargewicht und Molekulargewichtsverteilung zu machen.

Hierfür sind z.B. Hockdruckflüssigkeitschromatografie (HPLC) oder Gelpermeationschromatografie (GPC) geeignet.

Als stationäre Phase können übliche Trägermaterialien verwendet werden, z.B. Li-Chroprep®, Lohar®, LiChrosorb®, LiChrospher®, Perisorb®, Fractogel®, Fractosil®, Ditrastyragel®, Microstyragel®, Zorbax®, Bondagel® und Shodex®.

Als Lösungsmittel und Laufmittel können übliche Lösungsmittel verwendet werden. Diese sollten das Polymere ausreichend lösen. Z.B. sind 1-Chlornaphthalin, Diphenyl, N-Methylpyrrolidon, N-Cyclohexylpyrrolidon, N-Methylpiperidon, N-Methylcaprolactam, N-Methyllaurinlactam, Sulfolan, N,N'-Dimethylimidazolidinon, N,N'-Dimethylpiperazinon, Hexamethylphosphorsäuretriamid, 1-Methyl-1-oxo-phospholan und deren Mischungen geeignet.

Bei den chromatographischen Analysenmethoden können absolute oder relative Eichungen durchgeführt werden. Als Eichsubstanzen für relative Eichungen eignen sich beispielsweise übliche Polymere wie Polystyrol, Polyethylen, Polyethylenterephthalat, Polybutylenterephthalat, Polyester wie rein aromatische Polyester, Polycarbonat, Polyamide, wie PA6, PA11, Polysulfone oder Polyethersulfone.

Die Chromatographie zur analytischen Bestimmung der Molekulargewichte, bzw. Molekulargewichtsverteilung kann bei verschiedenen Drücken von 1 bis 10 bar durchgeführt werden.

Die chromatografische Bestimmung wird bei einer Temperatur von 20 bis 250°C durchgeführt.

Weiterhin können zur Verbesserung der Meßgenauigkeit der zu analysierenden Probe Substanzen wie Alkalihalogenide, Erdalkalicarboxylate, Phosphonium- oder Ammoniumverbindungen zugesetzt werden.

Bei der Auswertung der so ermittelten Analysendaten können die gewichtsgemittelten Molekulargewichte $M_w$ angegeben werden. Diese betragen 25 000 bis 500 000, vorzugweise 25 000 bis 300 000, besonders bevorzugt 25 000 bis 150 000.

Die erfindungsgemäß hergestellten Polyarylensulfide können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile.

Beispiel 1

Verwendung einer Apparatur mit 2 Reaktionskesseln

In einem 4 1-Kessel, der mit Thermometer, Rührer, Feststoffdosiertrichter, Tropftrichter, Rückflußkühler und Bodenablaß ausgerüstet ist, werden unter Stickstoff 1000 ml N-Methylcaprolactam und eine homogene Mischung aus 2,0 mol wasserfreiem Natriumsulfid und 0,22 mol Natriumfluorid und 0,4 mol wasserfreiem Natriumhydrogensulfid und 2,2 mol 1,4-Dichlorbenzol vorgelegt und zum leichten Rückfluß erwärmt.

Hierzu werden dann 2,2 mol 1,4-Dichlorbenzol gelöst in 1000 ml N-Methylcaprolactam und eine homogene Mischung aus 2,0 mol Natriumsulfid wasserfrei und 0,22 mol Natriumfluorid und 0,4 mol Natriumhydrogensulfid wasserfrei kontinuierlich gleichzeitig in einer Gesamtmenge von 400 g/h zudosiert. Sobald eine Füllmenge von insgesamt 2500 g erreicht ist wird durch denn Bodenablaß in dem Maße Reaktionslösung in den zweiten Reaktionskessel abgelassen, in dem in den ersten Kessel eindosiert wird. Im zweiten Kessel, der mit Rührer, Rückflußkühler, Thermometer und Bodenablaß ausgerüstet ist, wird das Reaktionsgemisch ebenfalls zum leichten Rückfluß erhitzt. Nachdem auch in diesem zweiten Kesesl eine Füllmenge von ca. 2500 g erreicht worden ist, wird ebenfalls kontinuierlich in dem Maße Reaktionslösung entnommen, in dem sie in den zweiten Kessel eindosiert wird. Die Aufarbeitung des Polyarylensulfids erfolgt nach den üblichen Methoden. Man erhält weißes Polyarylensulfid in einer Ausbeute von 94,6%, bezogen auf 1,4-Dichlorbenzol, mit einer Schmelzviskosität von 21 Pa.s.

Beispiel 2

Apparatur analog in Beispiel 1.

Analog Beispiel 1 jedoch enthält die Mischung von Natriumsulfid und -hydrogensulfid zusätzlich 0,15 mol Natriumacetat pro mol Natriumsulfid.

Weiterhin wird der Durchsatz auf 500 g/h Gesamtmenge erhöht. Man erhält ein weißes Polyarylensulfid mit einer Schmelzviskosität von 150 Pa.s in einer Ausbeute von 95,3%, bezogen auf 1,4-Dichlorbenzol.

Beispiel 3

Herstellung einer wasserfreien Mischung von Natriumsulfid und Natriumhydrogensulfid:

Natriumsulfid und Natriumhydrogensulfid werden in wenig Wasser in der Hitze gelöst und in ein kaltes, inertes Lösungsmittel getropft. Dabei erstarrt die Mischung in Form homogener Kügelchen, die im Vakuum bei steigenden Temperaturen, jedoch stets unterhalb der Schmelztemperatur der Mischung, von Wasser befreit werden können.

Herstellung einer waserfreien homogenen Mischung aus Natriumsulfid, Natriumhydrogensulfid und Natriumacetat:

Natriumsulfid, Natriumhydrogensulfid und Natriumacetat werden in möglichst wenig Wasser bei 130°C gelöst, und in einem Sprühtrockner vollständig getrocknet.

**Patentansprüche**

1. Verfahren zur wasserfreien Herstellung von gegebenenfalls verzweigten Polyarylensulfiden aus

a) 50—100 mol-% Dihalogenaromaten der Formel

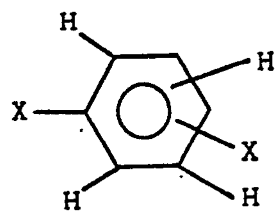

I

und 0—50 mol-% Dihalogenaromaten der Formel

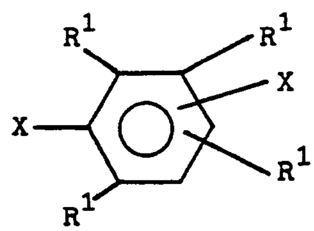

II

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 mol-%, bezogen auf die Summe der Dihalogenaromaten der Formel I und II, eines Tri- oder Tetrahalogenaromaten der Formel

$$ArX_n \qquad III,$$

wobei

Ar ein aromatischer oder heterocyclischer Rest ist

X für Halogen steht und

n für die Zahl 3 oder 4 steht und

c) bis 99 mol-% Natrium- oder Kaliumsulfid und 1 bis 50 mol-% Natrium- oder Kaliumhydrogensulfid, wobei das molare Verhältnis von (a+b):c im Bereich von 0,75:1 bis 1,15:1, liegt in

d) einem organischen Lösungsmittel, unter Mitverwendung von Katalysatoren und/oder Cosolventien, wobei das molare Verhältnis von Sulfid und Hydrogensulfid c) zu dem organischen Lösungsmittel d) im Bereich von 1:2 bis 1:15 liegt, dadurch gekennzeichnet, daß die gegebenenfalls kontinuierliche Umsetzung derart erfolgt, daß das Lösungsmittel, die Halogenaromaten der Formeln I, II und III sowie die Hydrogensulfide und Sulfide mit den Katalysatoren und/oder Cosolventien in wasserfreier Form gleichzeitig oder nacheinander der Reaktionsmischung zugeführt werden, wobei eingesetzte Feststoffe eine Korngröße von 1 bis 5000 Mikrometer, besitzen.

2. Verfahren nach Anspruch 1, dadurch gekennzeichnet, daß die Umsetzungstemperatur 200 bis 270°C beträgt.

3. Verfahren nach Anspruch 1, dadurch gekennzeichnet, daß die Reaktionstemperaturen von Kessel zu Kessel steigen und sich jeweils um 5 bis 30°C unterscheiden.

4. Verfahren nach Anspruch 1, dadurch gekennzeichnet, daß die Dosierung von einem Kessel in den anderen kontinuierlich erfolgt.

5. Verfahren nach Anspruch 1, dadurch gekennzeichnet, daß N-Methylcaprolactam als Lösungsmittel eingesetzt wird.

6. Verfahren nach Anspruch 1, dadurch gekennzeichnet, daß Natrium- oder Kaliumcarboxylate als Katalysatoren eingesetzt werden.

7. Verfahren nach Anspruch 1, dadurch gekennzeichnet, daß 1,4-Dichlorbenzol als Dihalogenaromat eingesetzt wird.

8. Verfahren nach Anspruch 1, dadurch gekennzeichnet, daß die Feststoffe eine Korngröße von 1 bis 1000 Mikrometer besitzen.

**Revendications**

1. Procédé de préparation par voie anhydre de sulfures de polyarylène éventuellement ramifiés à partir de:

a) 50—100% molaires d'hydrocarbures aromatiques dihalogénés de formule:

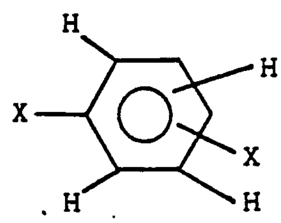

I

et 0—50% molaires d'hydrocarbures aromatiques dihalogénés de formule:

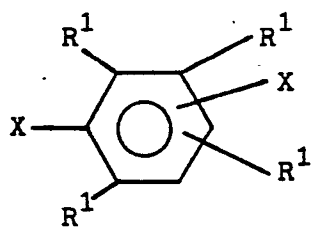

II

où

X représente des aotmes d'halogènes occupant mutuellement les positions méta ou para, par exemple, le chlore ou le brome, et

$R^1$ sont identiques ou différents et peuvent être chacun un atome d'hydrogène, un radical alkyle, un radical cycloalkyle, un radical aryle, un radical alkylaryle ou un radical arylalkyle, deux radicaux $R^1$ occupant la position ortho l'un par rapport à l'autre pouvant être reliés à un noyau aromatique ou hétérocyclique, tandis qu'un radical $R^1$ est toujours différent de l'hydrogène, et

b) 0 à 5% molaires (rapporté à la somme des hydrocarbures aromatiques dihalogénés des formules I et II) d'un hydrocarbure aromatique trihalogéné ou tétrahalogéné de formule:

$$ArX_n \qquad III$$

Ar représentant un radical aromatique ou hétérocyclique,

X représentant un atome d'halogène, et

n représentant 3 ou 4, et

c) 50 à 99% molaires de sulfure de sodium ou de sulfure de potassium et 1 à 50% molaires d'hydrogénosulfure de sodium ou d'hydrogénosulfure de potassium, le rapport molaire de (a + b):c se situant dans l'intervalle de 0,75:1 à 1,15:1, dans

d) un solvant organique en utilisant conjointement des catalyseurs et/ou des co-solvants, le rapport molaire du sulfure et de l'hydrogénosulfure c) vis-à-vis du solvant organique d) se situant dans l'intervalle de 1:2 à 1:15, caractérisé en ce que la réaction a éventuellement lieu en continu de telle sorte que le solvant, les hydrocarbures aromatiques halogénés répondant aux formules I, II et III, de même que les hydrogénosulfures et les sulfures soient acheminés avec lescatalyseurs et/ou les co-solvants sous forme anhydre simultanément ou successivement au mélange réactionnel, les substances solides utilisées ayant une granularité de 1 à 5.000 micromètres.

2. Procédé selon la revendication 1, caractérisé en ce que la température réactionnelle s'élève à 200—270°C.

3. Procédé selon la revendication 1, caractérisé en ce que les températures réactionnelles s'élèvent d'une chaudière à l'autre et ne se différencient pas chaque fois de 5 à 30°C.

4. Procédé selon la revendication 1, caractérisé en ce que le dosage d'une chaudière dans l'autre a lieu en continu.

5. Procédé selon la revendication 1, caractérisé en ce qu'on utilise le N-méthylcaprolactame comme solvant.

6. Procédé selon la revendication 1, caractérisé en ce qu'on utilise le carboxylate de sodium ou le carboxylate de potassium comme catalyseurs.

7. Procédé selon la revendication 1, caractérisé en ce qu'on utilise le 1,4-dichlorbenzène comme hydrocarbure aromatique dihalogéné.

8. Procédé selon la revendication 1, caractérisé en ce que les matières solides ont une granularité de 1 à 1.000 micromètres.

**Claims**

1. A process for the production of optionally branched polyarylene sulfides of

a) 50 to 100 mol-% aromatic dihalogen compounds corresponding to the following formula

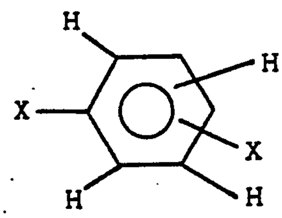

I

and 0 to 50 mol-% aromatic dihalogen compounds corresponding to the following formula

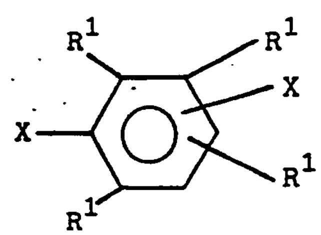

II

in which

the X's represents halogens, such as chlorine, or bromine, in the meta- or para-position to one another, the $R^1$'s may be the same or different and represent hydrogen, alkyl, cycloalkyl, aryl, alkylaryl, arylalkyl; two substituents $R^1$ in the ortho position to one another may be attached to form an aromatic or heterocyclic ring and one substituent $R^1$ is always different from hydrogen and

b) 0 to 5 mol-%, based on the sum of the aromatic dihalogen compounds corresponding to formulae I and II, of an aromatic tri- or tetrahalogen compound corresponding to the following formula

$$ArX_n \qquad III$$

in which

Ar is an aromatic or heterocyclic radical,

X is halogen and

n is the number 3 or 4 and

c) 50 to 99 mol-% sodium or potassium sulfide and 1 to 50 mol-% sodium or potassium hydrogen sulfide, the molar ratio of (a+b):c being from 0.75:1 to 1.15:1, in

d) an organic solvent using catalysts and/or cosolvents, the molar ratio of sulfide and hydrogen sulfide c) to the organic solvent d) being in the range from 1:2 to 1:15,

characterized in that the optionally continuous reaction is carried out by adding the solvent, the aromatic halogen compounds of formulae I, II and III and the hydrogen sulfides and sulfides with the catalysts and/or cosolvents in anhydrous form simultaneously or successively to the reaction mixture, solids used having a particle size in the range from 1 to 5000 micrometers.

2. A process as claimed in claim 1, characterized in that the reaction temperature is in the range from 200 to 270°C.

3. A process as claimed in claim 1, characterized in that the reaction temperatures increase from tank to tank and differ in each case by 5 to 30°C.

4. A process as claimed in claim 1, characterized in that addition from one tank to the next is continuous.

5. A process as claimed in claim 1, characterized in that N-methyl caprolactam is used as solvent.

6. A process as claimed in claim 1, characterized in that sodium or potassium carboxylates are used as catalysts.

7. A process as claimed in claim 1, characterized in that 1,4-dichlorobenzene is used as the aromatic dihalogen compound.

8. A process as claimed in claim 1, characterized in that the solids have a particle size of 1 to 1000 micrometers.